# EUROPEAN PATENT SPECIFICATION

(11) **EP 3 476 586 B1**
(45) Date of publication and mention of the grant of the patent: **12.02.2020**
(21) Application number: 18202299.6
(22) Date of filing: 24.10.2018
(51) Int. Cl.: B32B 3/12, B32B 5/02, B32B 5/18, B32B 5/24, B32B 15/14, B32B 17/02, B32B 27/34, B32B 27/12, B32B 3/26, B32B 9/00, B32B 9/04

(54) **METHOD FOR REINFORCING A COMPOSITE SANDWICH PANEL**
VERFAHREN ZUR VERSTÄRKUNG EINER VERBUNDSANDWICHPLATTE
PROCÉDÉ DE RENFORCEMENT D'UN PANNEAU SANDWICH COMPOSITE

(30) Priority: 24.10.2017 US 201715792129
(43) Date of publication of application: 01.05.2019
(73) Proprietor: Goodrich Corporation, Charlotte, NC 28217-4578 (US)
(72) Inventor: OWENS, George, Akron, OH Ohio 44319 (US)
(74) Representative: Dehns

(56) References cited:
- EP-A2- 3 095 690

## Description

### BACKGROUND

This application relates to aircraft panels, and specifically to composite sandwich panels.

Heated floors panels provide heat in aircraft to areas susceptible to cold such as the cabin or cockpit and allow for comfortable temperatures for passengers and crew during flight. Depending on the aircraft area, heated floor panels can be tailored to provide appropriate power density and heat. Heated floor panels may be made of composite sandwich panels.

Composite sandwich panels are panels comprised of multiple composite materials that provide structural support in aircraft panels, and are used in a variety of areas in aircraft, including floors, bulkheads, or wings. Composite sandwich panels are used for heated floor panels, where a heating element is located on the side of the composite sandwich panel facing into the cabin or cockpit area needing heating. In these cases, the heating elements are not incorporated into the composite sandwich panel, but instead lie on top of the composite sandwich panel. Thus, the heating element faces the cabin (or cockpit) area, and is susceptible to damage from passengers or crew movement cross the floor.

Composite sandwich panels are subject to high shearing force when subjected to bending loads. If a heating element (or impermeable barrier material) is placed internally in a sandwich panel, then the shear stress on the composite sandwich panel can be greater than the heater element material can withstand. Consequently, even relatively low loads can cause structural failures.

EP3095690 discloses an aircraft heated floor panel comprising: a first support layer; a second support layer; a heating layer located between the first support layer and the second support layer.

### SUMMARY

A composite sandwich panel with a heater incorporated into it includes a lower facing sheet, a first core layer attached to the lower facing sheet, a first structural ply attached to the first core layer opposite the lower facing sheet, a perforated heating element bonded to the first structural ply opposite the first core layer, a second structural ply bonded to the perforated heating element opposite the first structural ply, a second core layer attached to the second structural ply opposite the heating element, and an upper facing sheet attached to the second core layer opposite the second structural ply, the upper facing sheet facing an interior of an aircraft.

In another embodiment, an assembly includes a plurality of lower facing sheets, a first plurality of cores, wherein at least one of the first plurality of honeycomb cores is bonded to the plurality of lower facing sheets, a perforated element bonded to at least one of the first plurality of honeycomb cores opposite the plurality of lower facing sheets by a plurality of structural plies, a second plurality of honeycomb cores, wherein the perforated element is bonded to at least one of the second plurality of honeycomb cores opposite the first plurality of honeycomb cores, and a plurality of upper facing sheets bonded to at least one of the second plurality of honeycomb cores opposite the perforated element.

In another embodiment, a method of making a composite sandwich panel includes perforating a heating element, securing the heating element between a first structural ply and a second structural ply with a resin, and assembling a composite sandwich panel containing the heating element.

### BRIEF DESCRIPTION OF THE DRAWINGS

FIG. 1 is a cut-away perspective view of a composite sandwich panel with an incorporated heater element.
FIG. 2 is a flow chart depicting a method of making a composite sandwich panel with an incorporated heater element.

### DETAILED DESCRIPTION

Composite sandwich panels are subject to shear stress that can cause panel breakdown, particularly when a heating element layer is located inside the composite sandwich panel. A method of securing a heating element within a composite sandwich panel such that the heating element can withstand shear stresses is necessary.

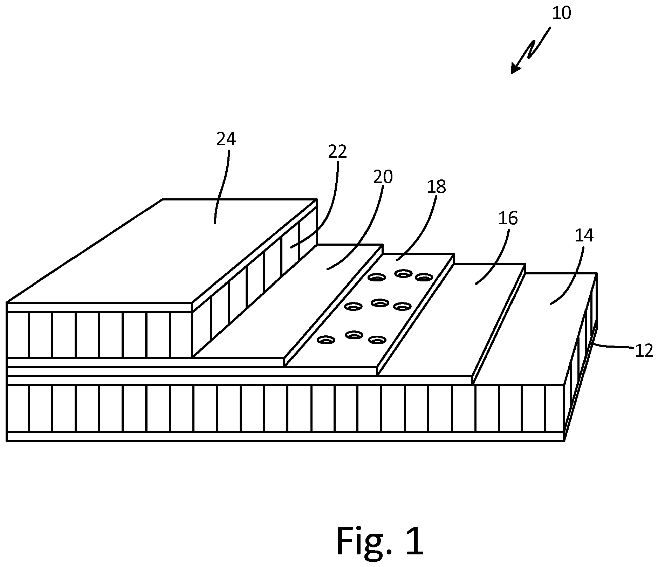

FIG. 1 is a cut-away perspective view of composite sandwich panel 10 with an incorporated heater element. Composite sandwich panel 10 includes lower face sheet 12, first core 14, first structural ply 16, perforated element 18, second structural ply 20, second core 22, and upper face sheet 24. Composite sandwich panel 10 can be used as a heated floor panel.

Lower face sheet 12 provides structural support to panel 10 on a side of panel 10 facing away from the cabin/cockpit area. Similarly, upper face sheet 24 provides structural strength to panel 10 on the side of panel 10 opposite lower face sheet 12. Under normal loading, upper face sheet 24 and lower face sheet 12 function similar to flanges of an I-beam whereby lower face sheets 12 are in tension and upper face sheets 24 are in compression. Together, lower face sheets 12 and upper face sheets 24 provide bending stiffness to sandwich panel 10. Lower face sheet 12 and upper face sheet 24 can be made of a pre-impregnated carbon fiber, fiberglass, Kevlar®, or other suitable reinforced polymer matrix materials. Lower face sheet 12 and upper face sheet 24 can be made of the same or different materials.

First core 14 and second core 22 are support layers made of an expanded honeycomb or an open cell or closed cell foam material. For example, first core 14 and second core 22 can be made of expanded Kevlar® or Nomex® honeycomb which provide sufficient support to panel 10. Cores 14 and 22 function similar to web of an I-beam by spacing upper face sheet 24 and lower face sheet 12 a set distance apart. Thus, in general, the greater the spacing the greater the panel stiffness will be. Cores 14, 22 also provide crush resistance to the panels. Cores 14 and 22 can be made of the same or differing materials depending on panel 10. First core 14 is adjacent to lower face sheet 12, while second core 22 is adjacent to upper face sheet 24. Thus, first core 14 and second core 22 are sandwiched in the middle of panel 10. Cores 14 and 22 provide structure support to panel 10, and can be thermally or electrically insulating as needed.

First structural ply 16 and second structural ply 20 surround perforated element 18 in the center of panel 10. First structural ply 16 and second structural ply 20 can be a pre-impregnated material, such as a carbon fiber or fiberglass with a resin system such as epoxy, polyurethane, phenolic, or other appropriate resins. The resin system in first structural ply 16 and second structural ply 20 can additionally contain short or chopped fibers. Structural plies 16, 20, are not electrically conductive. Structural plies 16, 20, secure perforated element 18 in the center of panel 10.

Perforated element 18 can be a heating element, such as a carbon allotrope heater or a metallic heater, or a different barrier element. If perforated element 18 is a heating element, it is used to temperature control the area on an external surface of panel 10, such as the surface of upper face sheet 24 in an aircraft cabin or cockpit. Perforated element 18 is secured by structural plies 16, 20.

Perforations in element 18 create channels through which resin can flow from first structural ply 16 to second structural ply 20. This allows for positive linking of first structural ply 16, perforated element 18, and second structural ply 20 within panel 10. With perforations in element 18, shear stresses are carried by the cured resin and element 18 does not have to carry them. In particular, this is useful when element 18 is a heating element and prevents shear stress from breaking down the heating element. If fibers are contained within the resin system of structural plies 16, 20, then the linkage securing element 18 between structural plies 16, 20 is further reinforced.

Perforated element 18 can have a void ratio (of perforations to non-perforated material) of at least 7.0%, preferably about 8.8%, and at least 2.0 perforations per inch squared, preferably at least 3.1 perforations per inch squared. Typically, perforations in element 18 are circular, but can also be other appropriate shapes, including slits, squares, or diamonds. The perforations in element 18 must allow for sufficient resin to run through, thus, perforations should extend through the entire thickness of element 18 to secure element 18. Additionally, the perforations should be spaced to prevent shear stress damage to element 18. In some embodiments perforations can be spaced evenly throughout the surface of element 18.

Panel 10 can be used as a heated floor panel in aircraft where element 18 is a heating element, secured inside composite sandwich panel 10. The use of perforations in element 18 of panel 10 allows for increased structural strength of element 18 and panel 10 without adding weight or increasing parts in panel 10. The use of a perforated element 18 in composite sandwich panel 10 does not require advanced manufacturing methods.

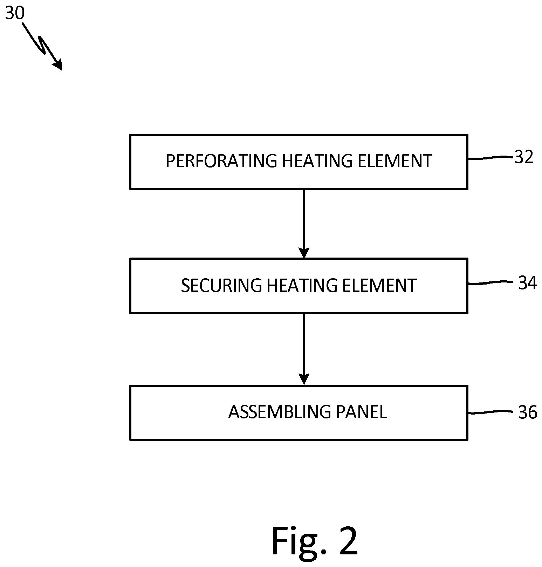

FIG. 2 is a flow chart depicting method 30 of making a composite sandwich panel with an incorporated heater element. Method 30 includes perforating a heating element (step 32), securing the heating element (step 34) and assembling the composite sandwich panel (step 36).

In step 32, a heating element (similar to element 18 of FIG. 1) is perforated. The heating element can be any material suitable for a heated floor panel assembly, such as a carbon allotrope heater (e.g., carbon nanotubes, graphene, or other carbon allotropes), a metallic heater, or another appropriate type of heating element. The heating element is perforated with mechanical means such as punching, cutting, or drilling, as is desired. Perforations made in the heating element can have a variety of shapes and sizes, as discussed above with respect to FIG. 1. The pattern of perforations on the surface of the heating element can vary depending on heating needs.

In step 34, the heating element is secured between two structural plies (such as plies 16, 20 in FIG. 1). The structural plies can be pre-impregnated resin systems, such as pre-impregnated carbon fiber or fiberglass systems. The resin can be an epoxy, polyurethane, phenolic, or other appropriate resin. The perforated heating element is placed (sandwiched) between the two structural plies, allowing the resin to infiltrate the perforations on the heating element. The perforations serve as channels that allow resin to travel through the heating element from one structural ply to the other. If pre-impregnated resin systems are not used, the resin can be infused into the perforations by a variety of other methods, such as Resin Transfer Molding (RTM), Vacuum Assisted Resin Transfer Molding (VARTM) or any of the other commonly used methods. After infusion of resin into the perforations, the heating element and plies can be cured or dried as needed.

Finally, in step 36, the composite sandwich panel is assembled around the heating element. On either side of the heating element (with plies), a core layer is attached. The core layers can be a foam or honeycomb structure, and can provide structural support and insulation if needed. On each of the core layers, opposite the heating element, one or more face sheets is attached. The face sheets provide an outer structurally supportive layer to the composite sandwich panel. The face sheets can be carbon fiber, fiberglass, pre-impregnated, or other materials depending on structural needs. The composite sandwich panel is then cured or dried as needed before being applied to an aircraft part needing a heated floor panel.

The composite sandwich panel with an integrated perforated heating element allows for the creation of heated floor panels that have both sufficient structural support and can withstand shear stress, including heating elements that can withstand shear stress. This method allows for creation of such panels without adding weight, manufacturing steps, or other parts to heated floor panels.

### Discussion of Possible Embodiments

The following are non-exclusive descriptions of possible embodiments of the present invention.

A composite sandwich panel includes a lower facing sheet, a first core layer attached to the lower facing sheet, a first structural ply attached to the first core layer opposite the lower facing sheet, a perforated heating element bonded to the first structural ply opposite the first core layer, a second structural ply bonded to the perforated heating element opposite the first structural ply, a second core layer attached to the second structural ply opposite the heating element, and an upper facing sheet attached to the second core layer opposite the second structural ply, the upper facing sheet facing an interior of an aircraft.

The panel of the preceding paragraph can optionally include, additionally and/or alternatively, any one or more of the following features, configurations and/or additional components:

The lower facing sheet and the upper facing sheet are comprised of a carbon fiber or fiberglass resin system.

The first and second core layers are comprised of a foam or a honeycomb material.

The first and second structural plies are comprised of a pre-impregnated fabric.

The perforated heating element is comprised of a metallic material, a carbon allotrope, Kapton, PEN, or a PET film.

The panel includes a resin running through the perforated heating element from the first structural ply to the second structural ply.

The resin is an epoxy, a polyurethane, a phenolic resin, or combinations thereof.

An assembly includes a plurality of lower facing sheets, a first plurality of cores, wherein at least one of the first plurality of honeycomb cores is bonded to the plurality of lower facing sheets, a perforated element bonded to at least one of the first plurality of honeycomb cores opposite the plurality of lower facing sheets by a plurality of structural plies, a second plurality of honeycomb cores, wherein the perforated element is bonded to at least one of the second plurality of honeycomb cores opposite the first plurality of honeycomb cores, and a plurality of upper facing sheets bonded to at least one of the second plurality of honeycomb cores opposite the perforated element.

The assembly of the preceding paragraph can optionally include, additionally and/or alternatively, any one or more of the following features, configurations and/or additional components:

The plurality of cores are each comprised of a foam or a honeycomb material.

The plurality of structural plies contains a resin.

The perforated elements contains perforations in a circular, rectangular, slit, or diamond shape.

The surface of the perforated element is covered by at least 7% perforations.

The perforated element contains at least 2 perforations per square inch.

The perforated element contains an equal density of perforations across the surface of the perforated element.

A method of making a composite sandwich panel includes perforating a heating element, securing the heating element between a first structural ply and a second structural ply with a resin, and assembling a composite sandwich panel containing the heating element.

The method of the preceding paragraph can optionally include, additionally and/or alternatively, any one or more of the following features, configurations and/or additional components:

Perforating the heating element comprises cutting, punching, or drilling perforations into the heating element.

Securing the heating element comprises infusing a resin into perforations on the heating element, the infused resin running from the first structural ply to the second structural ply.

The first structural ply and the second structural ply are pre-impregnated fabrics.

Assembling the composite sandwich panel includes attaching a first core to the first structural ply opposite the heating element, bonding lower face sheets to the first core opposite the first structural ply, attaching a second core to the second structural ply opposite the heating element, and bonding upper face sheets to the first core opposite the second structural ply.

The method includes curing the assembly.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A composite sandwich panel comprising:
a lower facing sheet (12);
a first core layer (14) attached to the lower facing sheet;
a first structural ply (16) attached to the first core layer opposite the lower facing sheet;
a perforated heating element (18) bonded to the first structural ply opposite the first core layer;
a second structural ply (20) bonded to the perforated heating element opposite the first structural ply;
a second core layer (22) attached to the second structural ply opposite the heating element; and
an upper facing sheet (24) attached to the second core layer opposite the second structural ply.

2. The panel of claim 1, wherein the lower facing sheet (12) and the upper facing sheet (24) are comprised of a carbon fiber or fiberglass resin system.

3. The panel of claim 1 or 2, wherein the first and second core layers (14,22) are comprised of a foam or a honeycomb material.

4. The panel of claim 1, 2 or 3, wherein the first and second structural plies (16,20) are comprised of a fabric pre-impregnated with resin.

5. The panel of any preceding claim, wherein the perforated heating element (18) is comprised of a metallic material, a carbon allotrope, Kapton, PEN, or a PET film.

6. The panel of any preceding claim, further comprising a resin running through the perforated heating element from the first structural ply to the second structural ply, and preferably wherein the resin is an epoxy, a polyurethane, a phenolic resin, or combinations thereof.

7. The panel of any preceding claim, wherein the perforated heating element (18) includes perforations extending fully through the perforated heating element, from the first structural ply to the second structural ply.

8. An assembly comprising:
a plurality of lower facing sheets (12);
a first plurality of honeycomb cores (14,22), wherein at least one of the first plurality of honeycomb cores is bonded to the plurality of lower facing sheets;
a perforated element (18) bonded to at least one of the plurality of cores opposite the plurality of lower facing sheets by a plurality of structural plies;
a second plurality of honeycomb cores, wherein the perforated element is bonded to at least one of the second plurality of honeycomb cores opposite the first plurality of honeycomb cores (14,22); and
a plurality of upper facing sheets (24) bonded to at least one of the second plurality of honeycomb cores opposite the perforated element.

9. The assembly of claim 8, wherein the plurality of structural plies contains a resin.

10. The assembly of claim 9, wherein the perforated elements contains perforations in a circular, rectangular, slit, or diamond shape.

11. The assembly of any of claims 8 to 10, wherein the surface of the perforated element is covered by at least 7% perforations, or wherein the perforated element contains at least 2 perforations per square inch, or wherein the perforated element contains an equal density of perforations across the surface of the perforated element.

12. A method of making a composite sandwich panel comprises:
perforating a heating element;
securing the heating element with a resin between a first structural ply and a second structural ply; and
assembling a composite sandwich panel containing the heating element.

13. The method of claim 12, wherein perforating the heating element comprises cutting, punching, or drilling perforations into the heating element.

14. The method of claim 12 or 13, wherein securing the heating element comprises infusing a resin into perforations on the heating element, the infused resin running from the first structural ply to the second structural ply.

15. The method of claim 12, 13 or 14, wherein assembling the composite sandwich panel comprises:
attaching a first core to the first structural ply opposite the heating element;
bonding lower face sheets to the first core opposite the first structural ply;
attaching a second core to the second structural ply opposite the heating element; and
bonding upper face sheets to the first core opposite the second structural ply.

## Patentansprüche

1. Verbundsandwichplatte, umfassend:
eine untere Außenlage (12);
eine erste Kernschicht (14), die an der unteren Außenlage angebracht ist;
eine erste strukturelle Bahn (16), die an der ersten Kernschicht gegenüber der unteren Außenlage angebracht ist;
ein perforiertes Heizelement (18), das mit der ersten strukturellen Bahn gegenüber der ersten Kernschicht verbunden ist;
eine zweite strukturelle Bahn (20), die mit dem perforierten Heizelement gegenüber der ersten strukturellen Bahn verbunden ist;
eine zweite Kernschicht (22), die an der zweiten strukturellen Bahn gegenüber dem Heizelement angebracht ist; und
eine obere Außenlage (24), die an der zweiten Kernschicht gegenüber der zweiten strukturellen Bahn angebracht ist.

2. Platte nach Anspruch 1, wobei die untere Außenlage (12) und die obere Außenlage (24) aus einem Kohlefaser- oder einem Glasfaserharzsystem bestehen.

3. Platte nach Anspruch 1 oder 2, wobei die erste und die zweite Kernschicht (14, 22) aus einem Schaum- oder einem Wabenmaterial bestehen.

4. Platte nach Anspruch 1, 2 oder 3, wobei die erste und die zweite strukturelle Bahn (16, 20) aus einem mit Harz vorimprägnierten Stoff bestehen.

5. Platte nach einem vorhergehenden Anspruch, wobei das perforierte Heizelement (18) aus einem metallischen Material, einem Kohlenstoffallotropen, Kapton, PEN oder einem PET-Film besteht.

6. Platte nach einem vorhergehenden Anspruch, ferner umfassend ein Harz, das das perforierte Heizelement von der ersten strukturellen Bahn zu der zweiten strukturellen Bahn durchläuft, und wobei das Harz bevorzugt ein Epoxid, ein Polyurethan, ein phenolisches Harz oder Kombinationen davon ist.

7. Platte nach einem vorhergehenden Anspruch, wobei das perforierte Heizelement (18) Perforationen beinhaltet, die sich von der ersten strukturellen Bahn zu der zweiten strukturellen Bahn vollständig durch das perforierte Heizelement erstrecken.

8. Baugruppe, umfassend:
eine Vielzahl von unteren Außenlagen (12);
eine erste Vielzahl von Wabenkernen (14, 22), wobei zumindest einer aus der ersten Vielzahl von Wabenkernen mit der Vielzahl von unteren Außenlagen verbunden ist;
ein perforiertes Element (18), das durch eine Vielzahl von strukturellen Bahnen mit zumindest einen aus der Vielzahl von Kernen gegenüber der Vielzahl von unteren Außenlagen verbunden ist;
eine zweite Vielzahl von Wabenkernen, wobei das perforierte Element mit zumindest einem aus der zweiten Vielzahl von Wabenkernen gegenüber der ersten Vielzahl von Wabenkernen (14; 22) verbunden ist; und
eine Vielzahl von oberen Außenlagen (24), die mit zumindest einem aus der zweiten Vielzahl von Wabenkernen gegenüber dem perforierten Element verbunden ist.

9. Baugruppe nach Anspruch 8, wobei die Vielzahl von strukturellen Bahnen ein Harz enthält.

10. Baugruppe nach Anspruch 9, wobei die perforierten Elemente Perforationen in einer kreisförmigen, rechteckigen, schlitzförmigen oder rautenförmigen Form enthalten.

11. Baugruppe nach einem der Ansprüche 8 bis 10, wobei die Oberfläche des perforierten Elements mit zumindest 7 % Perforationen bedeckt ist, oder wobei das perforierte Element zumindest 2 Perforationen pro Quadratzoll enthält, oder wobei das perforierte Element eine gleiche Dichte an Perforationen quer über die Oberfläche des perforierten Elements enthält.

12. Verfahren zur Herstellung einer Verbundsandwichplatte, umfassend:
Perforieren eines Heizelements;
Befestigen des Heizelements mit einem Harz zwischen einer ersten strukturellen Bahn und einer zweiten strukturellen Bahn; und
Zusammenbauen einer Verbundsandwichplatte, die das Heizelement enthält.

13. Verfahren nach Anspruch 12, wobei das Perforieren des Heizelements das Schneiden, Drücken oder Bohren von Perforationen in das Heizelement umfasst.

14. Verfahren nach Anspruch 12 oder 13, wobei das Befestigen des Heizelements das Infundieren eines Harzes in Perforationen an dem Heizelement umfasst, wobei das infundierte Harz von der ersten strukturellen Bahn zu der zweiten strukturellen Bahn läuft.

15. Verfahren nach Anspruch 12, 13 oder 14, wobei das Zusammenbauen der Verbundsandwichplatte Folgendes umfasst:
Anbringen eines ersten Kerns an der ersten strukturellen Bahn gegenüber dem Heizelement;
Verbinden von unteren Außenlagen mit dem ersten Kern gegenüber der ersten strukturellen Bahn;
Anbringen eines zweiten Kerns an der zweiten strukturellen Bahn gegenüber dem Heizelement; und
Verbinden von oberen Außenlagen mit dem ersten Kern gegenüber der zweiten strukturellen Bahn.

## Revendications

1. Panneau sandwich composite comprenant :
une feuille de revêtement inférieure (12) ;
une première couche centrale (14) fixée à la feuille de revêtement inférieure ;
un premier pli structurel (16) fixé à la première couche centrale opposée à la feuille de revêtement inférieure ;
un élément chauffant perforé (18) lié au premier pli structurel opposé à la première couche centrale ;
un second pli structurel (20) lié à l'élément chauffant perforé opposé au premier pli structurel ;
une seconde couche centrale (22) fixée au second pli structurel opposé à l'élément chauffant ; et
une feuille de revêtement supérieure (24) fixée à la seconde couche centrale opposée au second pli structurel.

2. Panneau selon la revendication 1, dans lequel la feuille de revêtement inférieure (12) et la feuille de revêtement supérieure (24) sont constituées d'un système de résine de fibre de carbone ou de fibre de verre.

3. Panneau selon la revendication 1 ou 2, dans lequel les première et seconde couches centrales (14, 22) sont constituées d'un matériau en mousse ou alvéolaire.

4. Panneau selon la revendication 1, 2 ou 3, dans lequel les premier et second plis structurels (16, 20) sont constitués d'un tissu préimprégné de résine.

5. Panneau selon une quelconque revendication précédente, dans lequel l'élément chauffant perforé (18) est constitué d'un matériau métallique, d'un allotrope de carbone, de Kapton, de PEN ou d'un film de PET.

6. Panneau selon une quelconque revendication précédente, comprenant en outre une résine traversant l'élément chauffant perforé depuis le premier pli structurel jusqu'au second pli structurel, et de préférence dans lequel la résine est une résine époxy, une résine polyuréthane, une résine phénolique ou des combinaisons de celles-ci.

7. Panneau selon une quelconque revendication précédente, dans lequel l'élément chauffant perforé (18) comporte des perforations s'étendant complètement à travers l'élément chauffant perforé, depuis le premier pli structurel jusqu'au second pli structurel.

8. Ensemble comprenant :
une pluralité de feuilles de revêtement inférieures (12) ;
une première pluralité de structures alvéolaires (14, 22), dans lequel au moins l'une de la première pluralité de structures alvéolaires est liée à la pluralité de feuilles de revêtement inférieures ;
un élément perforé (18) lié à au moins l'une de la pluralité de structures opposée à la pluralité de feuilles de revêtement inférieures par une pluralité de plis structurels ;
une seconde pluralité de structures alvéolaires, dans lequel l'élément perforé est lié à au moins l'une de la seconde pluralité de structures alvéolaires opposée à la première pluralité de structures alvéolaires (14, 22) ; et
une pluralité de feuilles de revêtement supérieures (24) liée à au moins l'une de la seconde pluralité de structures alvéolaires opposée à l'élément perforé.

9. Ensemble selon la revendication 8, dans lequel la pluralité de plis structurels contient une résine.

10. Ensemble selon la revendication 9, dans lequel les éléments perforés contiennent des perforations en forme de cercle, de rectangle, de fente ou de losange.

11. Ensemble selon l'une quelconque des revendications 8 à 10, dans lequel la surface de l'élément perforé est recouverte d'au moins 7 % de perforations, ou dans lequel l'élément perforé contient au moins 2 perforations par pouce carré, ou dans lequel l'élément perforé contient une densité égale de perforations sur la surface de l'élément perforé.

12. Procédé de fabrication d'un panneau sandwich composite comprenant :
la perforation d'un élément chauffant ;
la fixation de l'élément chauffant avec une résine entre un premier pli structurel et un second pli structurel ; et
l'assemblage d'un panneau sandwich composite contenant l'élément chauffant.

13. Procédé selon la revendication 12, dans lequel la perforation de l'élément chauffant comprend la découpe, le poinçonnage ou le perçage de perforations dans l'élément chauffant.

14. Procédé selon la revendication 12 ou 13, dans lequel la fixation de l'élément chauffant comprend l'infusion d'une résine dans des perforations sur l'élément chauffant, la résine infusée allant du premier pli structurel au second pli structurel.

15. Procédé selon la revendication 12, 13 ou 14, dans lequel l'assemblage du panneau sandwich composite comprend :
la fixation d'une première structure au premier pli structurel opposé à l'élément chauffant ;
la liaison des feuilles de revêtement inférieures à la première structure opposée au premier pli structurel ;
la fixation d'une seconde structure au second pli structurel opposé à l'élément chauffant ; et
la liaison des feuilles de revêtement supérieures à la première structure opposée au second pli structurel.
